# EUROPEAN PATENT SPECIFICATION

(11) **EP 0 706 693 B1**
(45) Date of publication and mention of the grant of the patent: **17.09.1997**
(21) Application number: 94918974.0
(22) Date of filing: 30.06.1994
(51) Int. Cl.: G06K 19/077

(54) **AN INTEGRATED CIRCUIT CARD**
IC-KARTE
CARTE DE CIRCUIT INTEGRE

(30) Priority: 02.07.1993 GB 9313749
(43) Date of publication of application: 17.04.1996
(73) Proprietor: GPT LIMITED, Coventry HA7 1HJ (GB)
(72) Inventor: JARVIS, Charles, Richard, Worcestershire (GB)
(74) Representative: Branfield, Henry Anthony
(86) International application number: GB9401417
(87) International publication number: WO9501612

(56) References cited:
- EP-A- 0 326 822
- EP-A- 0 383 435
- GB-A- 2 081 974
- GB-A- 2 253 591
- GB-A- 2 267 683

## Description

This invention relates to an integrated circuit card comprising a flexible printed circuit embedded in a protective material and to a method of producing such a card.

There is a demand for such cards having a thickness of the order of 1 mm and which are sufficiently robust so as to withstand some degree of flexing which is inevitable with such a thin card. These cards are commonly used for security purposes and as transaction cards and preferably have the same dimensions as so called "plastic cards".

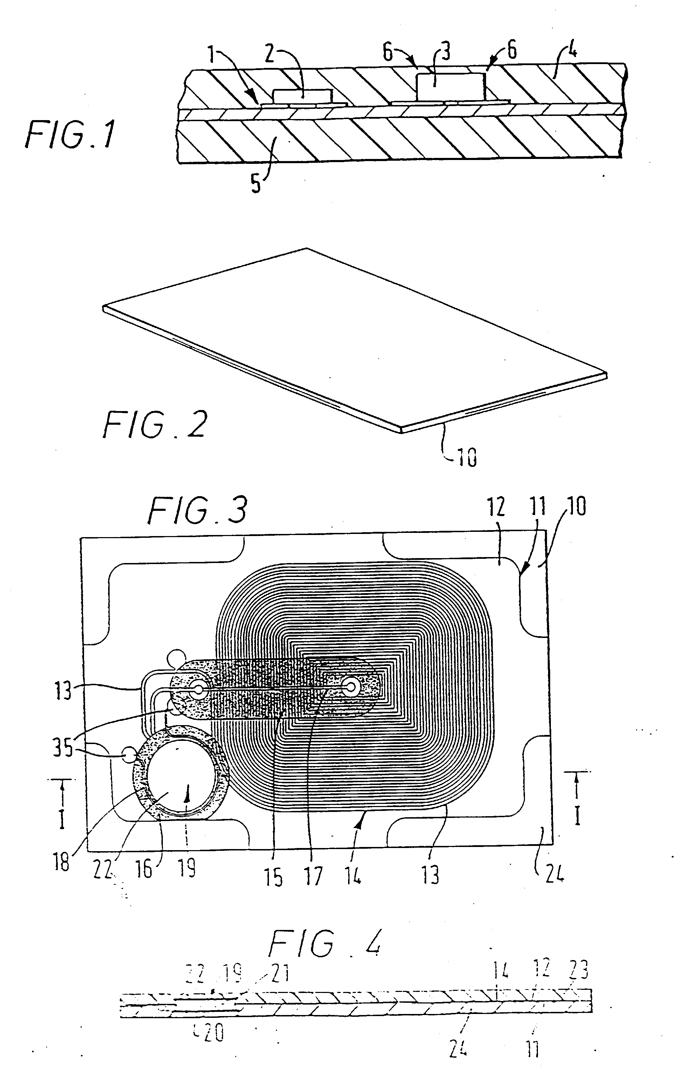

The initial proposal was to form the card in the manner depicted in Fig 1 where a flexible printed circuit 1, carrying electronic components 2 & 3 is shown laminated between two sheets of plastics material 4 & 5. (Note that the term "printed circuit" as used in this specification should be considered to refer to any system of conductive tracks on an insulating substrate, whether such tracks are formed by printing, etching, vapour deposition or any other technique.)

The top sheet 4 needs to be thick enough to allow the largest component 3 to become embedded in it during fabrication. The bottom sheet 5 needs to be of similar thickness so as to place the circuit 1 at least approximately centrally between opposite sides of the card thereby reducing strain on the circuit when the card is flexed. Unfortunately it was found that a sufficiently thin structure could not be formed in this way. Furthermore it was found that stresses cause by flexing of the card resulted in the failure of the plastics material at position such as point 6, this causing the larger components, such as 3 to "break out" of the structure. In an attempt to solve the above problem the present applicant previously proposed, in UK patent application GB2253591A, offsetting electronic elements relative to the plane of the printed circuit on which they are positioned by forming recesses in the printed circuit in which recesses the electrical elements are located.

The object of the present invention is to provide an improved integrated circuit card and method of producing such a card.

According to a first aspect the present invention there is provided an integrated circuit card comprising a printed circuit having an electronic element embedded in a protective layer of the card, characterised in that the electronic element is mounted on a surface of a limb of the printed circuit.

By employing the present invention it is possible to make a particularly thin card, because the total thickness of the card need only marginally exceed the thickness of the thickest "electronic element" (by which term it is meant an electrical component or an electrical component or components and any associated encapsulation material). The element preferably adopts a position between sandwiching layers of protective material without influencing the position of the rest of the printed circuit, allowing for the printed circuit to be centrally positioned in the card so as to reduce stresses when the card is flexed, the element lying in the plane of the printed circuit. This latter point is particularly important because the thinness of the card will inevitably result in increased flexibility. Alternatively employing the present invention enables a part of the printed circuit to be at a known particular position relative to the surfaces of the card whilst permitting the element to adopt its own position within the card. This is desirable if for example one portion of the printed circuit comprises electrical contacts which are to be at the surface of the card.

The electronic element may be an electronic component, for example a capacitor or an integrated circuit. In one preferred form of the invention the "electronic element" is a capsule formed by one or more of such electrical components embedded in a potting compound.

The limb may according to one embodiment of the invention be formed by a cut in the substrate material of the printed circuit and may be entirely surrounded by substrate material or may extend to an edge thereof. Alternatively the electronic element is fabricated on a first part of the printed circuit which part is subsequently connected to a second part of the printed circuit

The electronic element preferably has a tapered waist and is located in an aperture in the printed circuit, the relative dimensions of the aperture and element being such that the element is retained in the aperture by the waist pnor to the connection of the first part of the printed circuit to the second part. This enables the element to be retained in position whilst being connected to the second part of the printed circuit. The present invention is particularly advantageous where the card includes an inductive loop for communication between components of the electronic element and electronic circuitry external to the card.

It is particularly advantageous if the card is rectangular and the electronic element is located in one corner of the card with the limb extending to the element across a major axis of the card in the region where it meets the edge of the electronic element. Because the card is less prone to flexure along a major axis than along a shorter axis the point at which the flexible printed circuit joins the relatively hard electronic element is subjected to less stress which could lead to failure.

According to a second aspect of the present invention there is provided an electronic element comprising one or more electronic components encapsulated on a printed circuit which printed circuit has a limb portion extending from the encapsulated portion for connecting to a second part of a printed circuit of a integrated circuit card.

According to a third aspect of the present invention there is provided a method of producing an integrated circuit card comprising assembling electrical components on a limb of a printed circuit, encapsulating the components to form an electronic element and sandwiching the printed circuit and electronic element between two sheets of plastics material such that the printed circuit and electronic element become embedded in the plastics material, wherein the limb permits the electronic element to adopt its own position relative to a plane on which the printed circuit lies.

One embodiment of the invention will now be described, by way of example only, with reference to Figures 2 to 11 of the accompanying drawings in which like numerals have been used to indicate like parts, and of which:
Figure 1 schematically illustrates a previously proposed arrangement (not in accordance with the invention) of electrical components in a plastic card;
Figure 2 is a perspective view of a plastic card in accordance with the present invention;
Figure 3 is a plan view of the card of Figure 2 having its top sheet 4 removed to reveal the printed circuit;
Figure 4 is a cross-section through the card along the line I - I of Figure 3; and
Figures 5 to 11 illustrate various stages in the production of the plastic card depicted in Figures 2 to 4.

Referring first to Figure 2 there is shown a perspective view of the final card which has the same external dimensions as a standard "plastic card". The card contains an integrated circuit. On Figure 2 it is possible to see edge portions of a substrate of the integrated circuit, exposed at a central part of each edge of the card. The integrated circuit communicates with interrogation units via an inductive link located at appropriate locations. The integrated circuit would normally contain a memory device and could be used for any number of purposes, for example recording banking transactions or recording zones of buildings etc to which entry has been gained by use of the card as an identity card.

Referring to Figure 3 there is illustrated a plan view through a section of the card 10 of Figure 2 in the plane of the card. From this and the cross-section along line I - I illustrated in Figure 4 it can be seen that a printed circuit 11 comprises epoxy/glass substrate 12 and conductive tracks 13, a substantial portion of which form conductive loop 14. Darkly shaded regions 15 and 16 comprise of a thermoset dielectric material. The purpose of the region 15 is to insulate a silver conductor 17 from the inductive coil 14. The purpose of dielectric layer 16 will be explained later.

An integrated circuit and capacitive components, not shown in Figures 3 or 4, are contained within a capsule-like element 19 which is separated by cut 18 from the rest of the substrate 12. The region 20 of the substrate 12 is lowered below the plane of the printed circuit 11, the integrated circuit and capacitive components being located in potting compound 21 sandwiched between the portion of the substrate 20 and a capping portion 22 of the same material as the substrate 12.

The printed circuit 11 and element 19 are sandwiched between two outer sheets 23 and 24 of PVC thermoplastics material and two intervening layers (not shown in Figures 3 or 4), of polyester which is coated on both sides with a thermally activated catalyst adhesive by which the laminated structure is adhered. This polyester acts as a reinforcing layer preventing element 19 "breaking out" of the PVC layers 23 and 24.

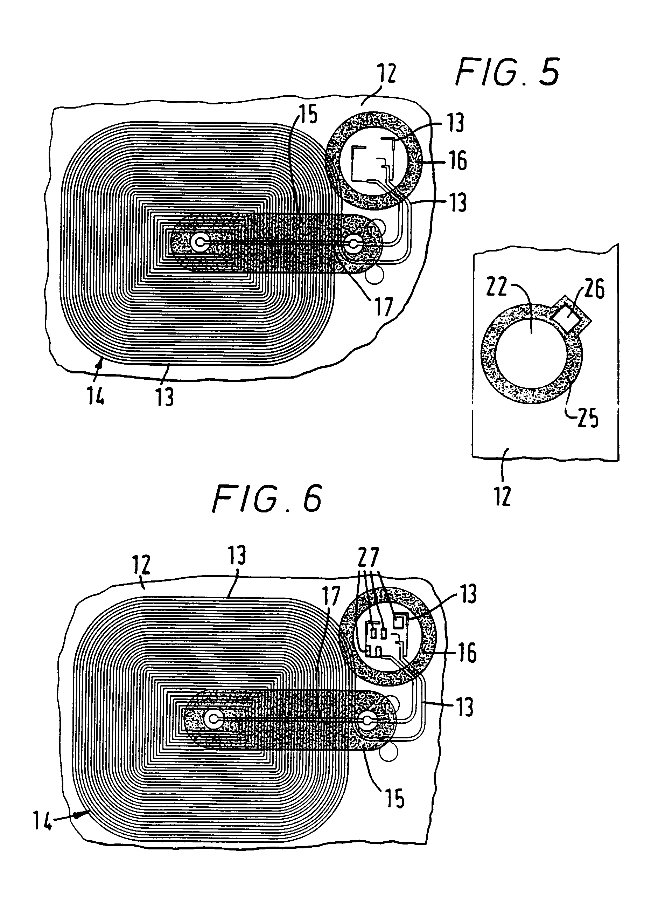

The fabrication process of the card illustrated in Figures 2, 3 and 4 begins with a substrate sheet 12 of copper-clad epoxy/glass which is etched to form a large number of identical printed circuits 13, each as illustrated in Figure 5. On top of each printed circuit is printed a thermoset dielectric material indicated by the shaded regions 15, 16 which is cured in place. The function of circular part 15 is explained below. The linear part 16 serves as an insulator to separate printed conductive link 17 between inner and outer ends of a coil 14 defined by part of the printed circuit 13. Separated from a main part of the substrate by lines of weakness not shown are a number of strips (not shown), each carrying printed patterns 25 (only one of which is illustrated), with apertures 26 therein, which ultimately become the top reinforcing caps of the elements 19.

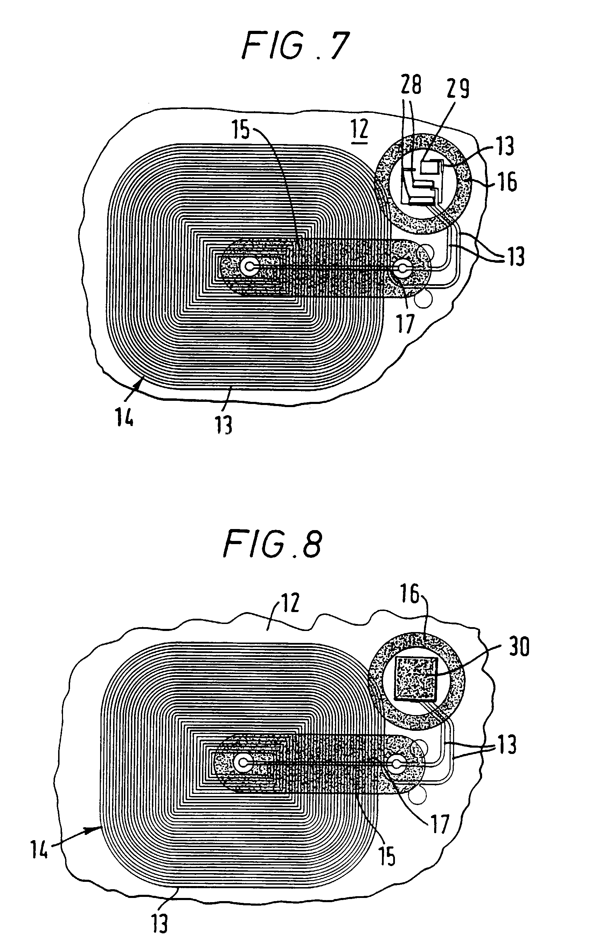

The substrate carrying the etched patterns is placed on a bed of a screen printing machine (not shown) and a screen placed over it. A squeegee is then used to print a low ionic epoxy encapsulant/adhesive material onto positions 27 as shown in Figure 6. This is a mixture of a resin and a catalyst which sets hard when cured. Suitable materials are, for example, available from Ablestick, Encaremix, or Dexter Hisol. The substrate is then placed in a "pick-and-place" machine which places components comprising of capacitors 28 and silicon chips 29, shown in Figure 7, onto the epoxy which acts as an adhesive to hold them in place. The silicon chips 29 at this stage are "naked", that is to say they are not encapsulated. A notable feature of this process is that the epoxy is applied to areas where there is no copper layer, this being unnecessary because of the adhesive attachment of the components. A saving of 35 microns in thickness is thus achieved as compared with arrangements where components are soldered on top of a copper track. It will be appreciated that this reduction of thickness may be of crucial importance in situations where there may typically be a requirement for the entire assembly not to exceed 760 microns. An advantage of using epoxy adhesive is that if suitably selected it remains in its adhesive state for a sufficient time period which exceeds the maximum period during which the screen printing machine is not being operated. This avoids the need to clean down the equipment.

The sheet substrate carrying the etched patterns and respective components positioned on it, is then baked until the epoxy has gelled, i.e. set but not hardened. This takes place under a flow of nitrogen to prevent oxidation of the copper. The sheet is then placed on the work-holder of a wire bonding machine where it is held in position by a vacuum. Suitable machines for this purpose are commercially available. Wire connections are then made between contacts on the individual components to appropriate parts of the printed copper circuitry. This is done by an ultrasonically assisted diffusion welding process. The sheet is then placed back in the screen printer with a different stencil in place. This stencil is much thicker, its thickness being selected so that the same epoxy encapsulant/adhesive now to be deposited over the components is sufficient to cover them completely. Notably, this material is the same as that which was used for the adhesive. It does not have to be the same but it preferably has similar physical characteristics. After the removal of the stencil, the sheet is as shown in Figure 8, the components being encapsulated by the encapsulant 30.

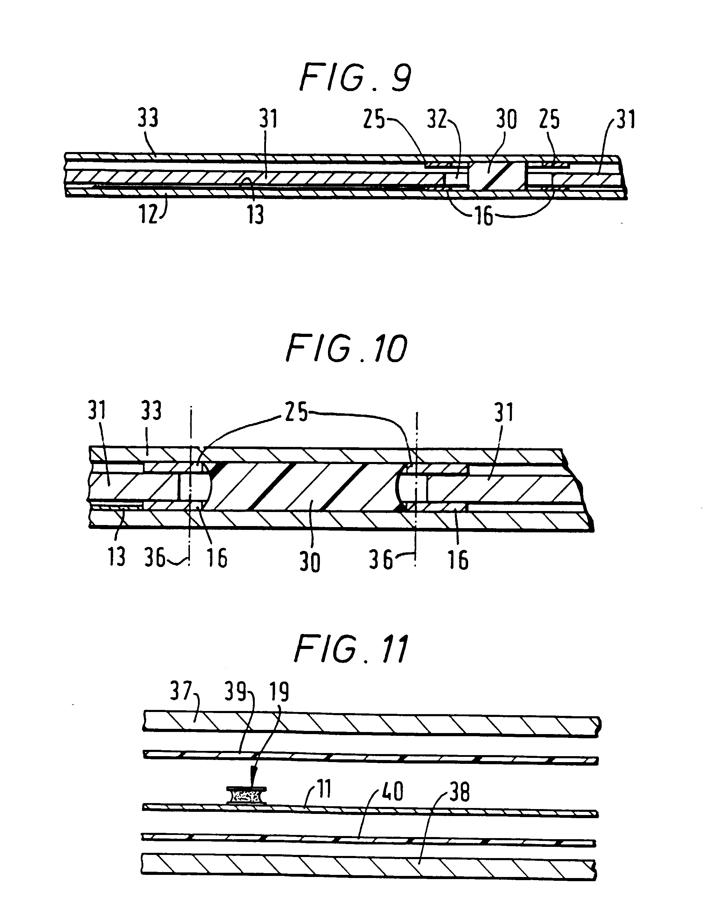

Figure 9 shows in cross-section the next stage of the process where a copper spacer 31 having a plurality of apertures 32 (corresponding to each of the regions on the sheet having encapsulant 30 deposited thereon) is located on the sheet, 12. Previously placed on the copper sheet is each of the now separated strips 33, previously referred to, to form regions defined by printed patterns 25, from which regions reinforcing caps 22 will be formed. The spacer 31, with strips 33 located on it by means of pins (not shown for clarity), has been placed on top of the substrate. The whole arrangement is then pressed such that the patterns 25 are pressed into contact with the spacer 31 which is thus pressed closely down onto the circular part 16 of the dielectric material. It also presses the portions of the strip 33 defined by the patterns 25 onto the, still soft, epoxy encapsulant/adhesive thereby pulling the entire assembly down to the desired height. During this process the encapsulant spreads out as shown in detail in Figure 10, but not as far as the edges of the spacer sheet. It is prevented from doing so by its meniscus acting against the inner edges of the copper pattern 25 and dielectric ring 16, which meniscus thereby defines the radius of the encapsulant.

The whole assembly is now placed in an oven and cured at a temperature of 150°C. This fully gels the encapsulant/adhesive both under the components and the encapsulant portion. The assembly is now placed on a rule die which forms cuts 18 which can be seen in Figure 3. These cuts are "horseshoe-shaped" and configured so that their free ends correspond with the slots 26 (see Figure 5) in the strip 33. Note at this stage that the ends of each cut are located on the copper pads 35 of Figure 3. The cutter presses through the structure as illustrated by dotted lines 36 in Figure 10, leaving the element 19 on a limb of the substrate 11, as is best seen from Figure 3, and leaving the spacer 31 and remaining portions of the strips 33 free to be removed.

It will be noted from Figure 3 that the electrical connections to the element run parallel to an edge of the card, in which direction the card is most resistant to bending, as opposed to across the hinge line which runs across the corner of the card where it is most susceptible to bending.

Using another rule die, cruciform shapes are cut out of the assembly to give each printed circuit the shape illustrated in Figure 3. This removes the epoxy/glass substrate from those areas which are to become the corners of the finished cards. It is notably these corner parts which are most subject to the type of manipulation which encourages de-lamination.

The printed circuit 1 with reinforced element 19 is now placed, as shown in Figure 11, between two outer sheets 37 and 38 of thermo plastics material in the pvc family with the interposition of polyester layers coated on both sides with a thermally activated catalyst adhesive 21. The assembled sandwich is placed in a press where it is heated to cause lamination. During this stage the elements 19 embed themselves in each of the sheets of thermo-plastic material in such a way as to tend to centralise themselves between opposite faces leaving the plane of the substrate sheet 1 on the central axis as shown in Figure 4. The press now opens and the assembly is removed to a cutting machine where the individual cards as illustrated in Figures 2 and 3 are cut out.

Although in the specific embodiment illustrated each electronic element is formed integrally with the printed circuit, each element could alternatively be formed on a separate part of the printed circuit which is subsequently connected to the main part of the printed circuit, the element being retained in an aperture in the main printed circuit formed by a circular or similar cutter by being "snapped" into the aperture, the end faces of the element being of slightly greater diameter than the aperture. The elements would be formed by a process very similar to that disclosed except they would be formed on a substrate having a far greater density of elements, from which substrate they would eventually be cut. The elements can be cut from the substrate having a limb extending from the element by which they are connected to the main portion of the printed circuit of a card by normal soldering of conductive tracks on the limb to tracks on the printed circuit or by similar techniques.

The card shown in the illustration shows an electronic element connected to an inductive loop 14 in a contactless card. The electronic element could alternatively be connected by means of a limb to an electrical contact or other component of a card.

## Claims

1. An integrated circuit card comprising a printed circuit (11) having an electronic element (19) embedded in a protective layer (23, 24) of the card, characterised in that the electronic element (19) is mounted on a surface of a limb of the printed circuit.

2. A card as claimed in claim 1 wherein the element comprises one or more electrical components embedded in a potting compound (21).

3. A card as claimed in claim 1 or claim 2 wherein the element is located in a position adapted during fabrication of the card by the action of being sandwiched between two sheets of plastics material (22, 23) of the card.

4. A card as claimed in claim 1, 2 or 3 wherein the element (19) lies in the plane of the printed circuit (11).

5. A card as claimed in any preceding claim wherein the limb is formed by a cut (18) in the substrate material (12) of the printed circuit (11).

6. A card as claimed in any one of claims 1 to 4 wherein the electronic element is fabricated on a first part of the printed circuit which part is subsequently connected to a second part of the printed circuit.

7. A card as claimed in claim 6 wherein the electronic element (19) has a tapered waist and is located in an aperture in the printed circuit, the relative dimensions of the aperture and element being such that the element is retained in the aperture by the waist prior to the connection of the first part of the printed circuit to the second part.

8. A card as claimed in any preceding claim wherein the element is located such that it is intersected by a plane on which the printed circuit lies.

9. A card as claimed in any preceding claim wherein the printed circuit includes an inductive loop (13) for communication between components of the electronic element (19) and electronic circuitry external to the card.

10. A card as claimed in any preceding claim wherein the card is rectangular and the electronic element (19) is located in one comer of the card with the limb extending to the element acioss a major axis of the card in the region where it meets the edge of the electronic element.

11. A method of producing an integrated circuit card comprising assembling electrical components on a limb of a printed circuit (11), encapsulating the components to form an electronic element (19) and sandwiching the printed circuit (11) and electronic element (19) between two sheets (22,23) of plastics material such that the printed circuit (11) and electronic element (19) become embedded in the plastics material, wherein the limb permits the electronic element (19) to adopt its own position relative to a plane on which the printed circuit (11) lies.

12. A method as claimed in claim 11 wherein the electronic element (19) is fabricated on a limb of a printed circuit (11) which limb is subsequently joined to the printed circuit (11).

13. A method as claimed in claim 12 wherein the electronic element (19) is formed with tapered waist and the printed circuit (11) with an aperture therein dimensioned such that the electronic element (19) can be inserted through the aperture, but such that the electronic element (19) is retained in the aperture by means of the tapered waist the electronic element (19) substantially being connected to the printed circuit (11).

## Patentansprüche

1. Karte mit integrierter Schaltung, die eine gedruckte Schaltung (11) mit einem elektronischen Element (19) um-faßt, das in einer Schutzschicht (23, 24) der Karte eingebettet ist,
dadurch **gekennzeichnet**,
daß das elektronische Element (19) auf einer Oberfläche eines Gliedes der gedruckten Schaltung angebracht ist.

2. Karte nach Anspruch 1, wobei das Element eine oder mehrere elektrische Komponenten umfaßt, die in einer Vergußmasse (21) eingebettet sind.

3. Karte nach Anspruch 1 oder 2, wobei das Element in einer Position angeordnet ist, die während der Herstellung der Karte dadurch eingenommen wird, daß es zwischen zwei Kunststoffmaterialplatten (22, 23) der Karte geschichtet wird.

4. Karte nach Anspruch 1, 2 oder 3, wobei das Element (19) in der Ebene der gedruckten Schaltung (11) liegt.

5. Karte nach einem der vorangegangenen Ansprüche, wobei das Glied durch einen Schnitt (18) in dem Substratmaterial (12) der gedruckten Schaltung (11) ausgebildet ist.

6. Karte nach einem der vorangegangenen Ansprüche 1 bis 4, wobei das elektronische Element auf einem ersten Teil der gedruckten Schaltung hergestellt wird, wobei dieses Teil nachfolgend mit einem zweiten Teil der gedruckten Schaltung verbunden wird.

7. Karte nach Anspruch 6, wobei das elektronische Element (19) ein verjüngtes Mittelstück besitzt und in einer Öffnung in der gedruckten Schaltung angeordnet ist, wobei die relativen Abmessungen der Öffnung und des Elementes so sind, daß das Element in der Öffnung durch das Mittelstück vor der Verbindung des ersten Teiles der gedruckten Schaltung mit dem zweiten Teil gehalten wird.

8. Karte nach einem der vorangegangenen Ansprüche, wobei das Element so angeordnet ist, daß es durch eine Ebene geschnitten wird, auf der die gedruckte Schaltung liegt.

9. Karte nach einem der vorangegangenen Ansprüche, wobei die gedruckte Schaltung eine Induktionsschleife (13) für die Kommunikation zwischen den Komponenten des elektronischen Elementes (19) und der außerhalb der Karte angeordneten Schalttechnik enthält.

10. Karte nach einem der vorangegangenen Ansprüche, wobei die Karte rechtwinklig ausgebildet ist und das elektronische Element (19) in einer Ecke der Karte angeordnet ist, wobei sich das Glied zu dem Element über eine Hauptachse der Karte in den Bereich erstreckt, an dem es mit der Kante des elektronischen Elementes zusammentrifft.

11. Verfahren zum Erzeugen einer Karte mit integrierter Schaltung, das umfaßt, daß die elektrischen Komponenten auf einem Glied einer gedruckten Schaltung (11) aufgebaut werden, die Komponenten eingekapselt werden, um ein elektronisches Element (19) auszubilden und die gedruckte Schaltung (11) und das elektronische Element (19) zwischen zwei Platten (22, 23) aus Kunststoffmaterial verbundartig geschichtet werden, so daß die gedruckte Schaltung (11) und das elektronische Element (19) in dem Kunststoffmaterial eingebettet werden, wobei das Glied ermöglicht, daß das elektronische Element (19) seine eigene Position relativ zu einer Ebene einnimmt, auf der die gedruckte Schaltung (11) liegt.

12. Verfahren nach Anspruch 11, wobei das elektronische Element (19) auf einem Glied einer gedruckten Schaltung (11) hergestellt wird, wobei das Glied nachfolgend mit der gedruckten Schaltung (11) verbunden wird.

13. Verfahren nach Anspruch 12, wobei das elektronische Element (19) mit einem verjüngtem Mittelstück, und die gedruckte Schaltung (11) mit einer Öffnung darin ausgebildet werden, die so dimensioniert ist, daß das elektronische Element (19) durch die Öffnung eingesetzt werden kann, jedoch so, daß das elektronische Element (19) in der Öffnung mittels des verjüngten Mittelstücks gehalten wird, wobei das elektronische Element (19) im wesentlichen mit der gedruckten Schaltung (11) verbunden wird.

## Revendications

1. Carte à circuit intégré comprenant un circuit imprimé (11) possédant un élément électronique (19) incorporé dans une couche de protection (23, 24) de la carte, caractérisé en ce que l'élément électronique (19) est monté sur une surface d'une branche du circuit imprimé.

2. Carte selon la revendication 1, dans laquelle l'élément comprend un ou plusieurs composants électriques incorporés dans un composé d'encapsulation (21).

3. Carte selon la revendication 1 ou 2, dans laquelle l'élément est situé dans une position prévue lors de la fabrication de la carte par l'action de prise en sandwich entre deux feuilles de matière plastique (22, 23) de la carte.

4. Carte selon la revendication 1, 2 ou 3, dans laquelle l'élément (19) s'étend dans le plan du circuit imprimé (11).

5. Carte selon l'une quelconque des revendications précédentes, dans laquelle la branche est formée par une découpe (18) dans le matériau de support (12) du circuit imprimé (11).

6. Carte selon l'une quelconque des revendications 1 à 4, dans laquelle l'élément électronique est fabriqué sur une première partie du circuit imprimé qui est ensuite raccordée à une seconde partie du circuit imprimé.

7. Carte selon la revendication 6, dans laquelle l'élément électronique (19) possède un étranglement conique et est situé dans une ouverture du circuit imprimé, les dimensions relatives de l'ouverture et de l'élément étant telles que l'élément est maintenu dans l'ouverture par l'étranglement avant la connexion de la première partie du circuit imprimé avec la seconde.

8. Carte selon l'une quelconque des revendications précédentes, dans laquelle l'élément est situé de telle façon qu'il soit coupé par un plan dans lequel s'étend le circuit imprimé.

9. Carte selon l'une quelconque des revendications précédentes, dans laquelle le circuit imprimé comprend une boucle inductive (13) pour une communication entre des composants de l'élément électronique (19) et un circuit électronique externe à la carte.

10. Carte selon l'une quelconque des revendications précédentes, dans laquelle la carte est rectangulaire et l'élément électronique (19) est situé dans un coin de la carte, la branche s'étendant vers l'élément selon un axe principal de la carte dans la zone où elle rencontre le bord de l'élément électronique.

11. Procédé de production d'une carte à circuit intégré comprenant l'assemblage de composants électriques sur une branche d'un circuit imprimé (11), l'encapsulation des composants de façon à former un élément électronique (19) et la prise en sandwich du circuit imprimé (11) et de l'élément électronique (19) entre deux feuilles (22, 23) de matière plastique de telle façon que le circuit imprimé (11) et l'élément électronique (19) soient encapsulés dans la matière plastique, la branche permettant à l'élément électronique (19) de prendre sa propre position par rapport à un plan dans lequel s'étend le circuit imprimé (11).

12. Procédé selon la revendication 1, selon lequel l'élément électronique (19) est fabriqué sur une branche d'un circuit imprimé (11), branche qui est ensuite jointe au circuit imprimé (11).

13. Procédé selon la revendication 2, selon lequel l'élément électronique (19) est formé d'un étranglement conique et le circuit imprimé (11) d'une ouverture de dimensions telles que l'élément électronique (19) puisse être inséré par l'ouverture mais de telle façon que l'élément électronique (19) soit maintenu dans l'ouverture au moyen de l'étranglement conique, l'élément électronique (19) étant pratiquement raccordé au circuit imprimé (11).
